# EUROPEAN PATENT SPECIFICATION

(11) **EP 4 213 577 B1**
(45) Date of publication and mention of the grant of the patent: **29.04.2026**
(21) Application number: 22778445.1
(22) Date of filing: 01.03.2022
(51) Int. Cl.: H04W 76/11, H04L 67/10, H04L 61/4511

(54) **ADDRESS INFORMATION SENDING METHOD AND APPARATUS, ADDRESS INFORMATION OBTAINING METHOD AND APPARATUS, DEVICE, AND MEDIUM**
VERFAHREN UND VORRICHTUNG ZUM SENDEN VON ADRESSENINFORMATIONEN, VERFAHREN UND VORRICHTUNG ZUM ERHALT VON ADRESSENINFORMATIONEN, VORRICHTUNG UND MEDIUM
PROCÉDÉ ET APPAREIL D'ENVOI D'INFORMATIONS D'ADRESSE, PROCÉDÉ ET APPAREIL D'OBTENTION D'INFORMATIONS D'ADRESSE, DISPOSITIF ET SUPPORT

(30) Priority: 02.04.2021 CN 202110362381
(43) Date of publication of application: 19.07.2023
(73) Proprietor: Tencent Technology (Shenzhen) Company Limited, Shenzhen, Guangdong, 518057 (CN)
(72) Inventor: XIONG, Chunshan, Shenzhen, Guangdong 518057 (CN)
(74) Representative: Novagraaf International SA
(86) International application number: PCT/CN2022/078589
(87) International publication number: WO 2022/206260

(56) References cited:
- CN-A- 111 918 279
- CN-A- 113 115 480
- KR-A- 20200 115 155
- HUAWEI ET AL: "EAS Discovery for Session Breakout connectivity model", vol. SA WG2, no. e-meeting; 20210224 - 20210309, 18 February 2021 (2021-02-18), XP052172464, Retrieved from the Internet <URL:https://ftp.3gpp.org/tsg_sa/WG2_Arch/TSGS2_143e_Electronic/Docs/S2-2100116.zip S2-2100116 - EAS discovery for session breakout_1.3-cl.docx> [retrieved on 20210218]
- "3rd Generation Partnership Project; Technical Specification Group Services and System Aspects; 5G System Enhancements for Edge Computing; Stage 2 (Release 17)", vol. SA WG2, no. V0.1.0, 15 March 2021 (2021-03-15), pages 1 - 29, XP052000004, Retrieved from the Internet <URL:https://ftp.3gpp.org/Specs/archive/23_series/23.548/23548-010.zip 23548-010-rm.docx> [retrieved on 20210315]
- "3rd Generation Partnership Project; Technical Specification Group Services and System Aspects; System architecture for the 5G System (5GS); Stage 2 (Release 17)", vol. SA WG2, no. V17.0.0, 30 March 2021 (2021-03-30), pages 1 - 489, XP052000157, Retrieved from the Internet <URL:https://ftp.3gpp.org/Specs/archive/23_series/23.501/23501-h00.zip 23501-h00.docx> [retrieved on 20210330]
- HUAWEI, NOKIA, NOKIA SHANGHAI BELL, CHINA MOBILE, ZTE, FUTUREWEI, NTT DOCOMO, LENOVO, INTERDIGITAL INC.: "EAS Discovery for Session Breakout connectivity model", 3GPP DRAFT; S2-2100116, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20210224 - 20210309, 18 February 2021 (2021-02-18), Mobile Competence Centre ; 650, route des Lucioles ; F-06921 Sophia-Antipolis Cedex ; France, XP052172463
- "3rd Generation Partnership Project; Technical Specification Group Services and System Aspects; Study on enhancement of support for Edge Computing in 5G Core network (5GC) (Release 17)", 3GPP STANDARD; TECHNICAL REPORT; 3GPP TR 23.748, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V17.0.0, 17 December 2020 (2020-12-17), Mobile Competence Centre ; 650, route des Lucioles ; F-06921 Sophia-Antipolis Cedex ; France , pages 1 - 250, XP051975180

## Description

### RELATED APPLICATION

This application claims priority to Chinese Patent Application No. 202110362381.8, entitled "METHOD AND APPARATUS FOR TRANSMITTING ADDRESS INFORMATION, METHOD AND APPARATUS FOR OBTAINING ADDRESS INFORMATION, DEVICE, AND MEDIUM" filed on April 2, 2021.

### FIELD OF THE TECHNOLOGY

Embodiments of this application relate to the field of mobile communication, and in particular, to a method and apparatus for transmitting address information, a method and apparatus for obtaining address information, a device, and a medium.

### BACKGROUND OF THE DISCLOSURE

The 5G core network (5GC) supports adopting the protocol data unit (PDU) session to support edge computing.

In an edge computing scenario, a domain name system (DNS) query sent by user equipment (UE) is processed by an edge application server discovery function (EASDF).

However, before the DNS query, how the UE learns of address information of the EASDF is a technical problem that is still unresolved.

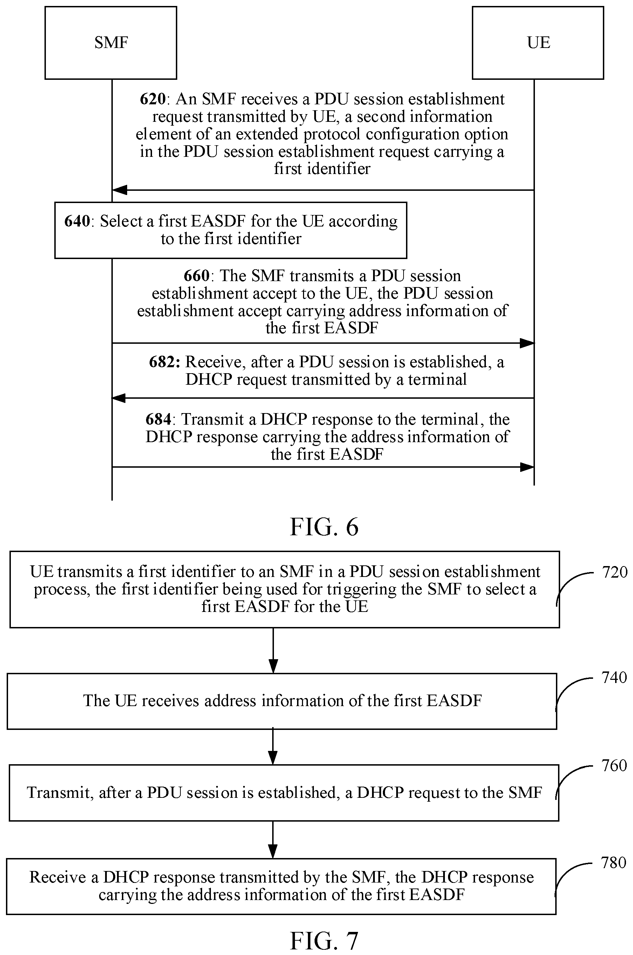

S2-2100116 discloses the EAS discovery and re-discovery procedures for PDU Session Breakout connectivity model. In 6.2.3.2.1, for the case that the UE DNS Query is to be handled by EASDF, the following applies. During the PDU Session establishment procedure, the SME selects an EASDF and provides its address to the UE as the DNS Server to be used for the PDU Session. The UE sends DNS Query to the EASDF. The SMF configures the EASDF with rules to handle DNS messages of the UE: If the FQDN in a DNS Query matches the FQDN(s) provided by the SMF, based on instructions by SMF, one of the following options is executed by the EASDF. Specifically, the steps in figure 6.2.3.2.2-1 include: 1. UE sends PDU Session Establishment Request to the SMF as shown in step 1 of clause 4.3.2.2.1 of TS 23.502[3]. 2. The SMF selects EASDF as described clause 6.3.x (TBD) of TS 23.501[1]. This selection may use NRF discovery or may be based on SME local configuration. The EASDF may register onto the NRF. 3. The SMF invokes Neasdf_DNSContext _Create Request (UE IP address, callback URI, rules to handle DNS messages from the UE) to the selected EASDF. The rules to handle DNS messages from the UE may include [ECS information], [local DNS server information], [need to use SMF to forward traffic to the local DNS server], notification condition (when to notify the SMF).

TS 23.548 V0.1 discloses the EAS discovery and re-discovery procedures for PDU Session Breakout connectivity model. In 6.2.3.2.2, for the case that the UE DNS Query is to be handled by EASDF, the following applies. During the PDU Session establishment procedure, the SMF selects an EASDF and provides its address to the UE as the DNS Server to be used for the PDU Session. The UE sends DNS Query to the EASDF. The SMF may configure the EASDF with DNS message handling rules to forward DNS messages of the UE and/or report when detecting DNS messages. The DNS message reporting rule may include DNS message type (i.e. DNS Query or DNS Response), IP address range(s) or FQDN range(s) in DNS Answer field or FQDN range(s) in DNS Query field. If the FQDN in a DNS Query matches the FQDN(s) provided by the SMF, based on instructions by SMF.

### SUMMARY

The invention is defined by the subject-matter of the independent claims.

### BRIEF DESCRIPTION OF THE DRAWINGS

FIG. 1 is a structural block diagram of a communication system according to an exemplary embodiment of this application.
FIG. 2 is a structural block diagram of a communication system according to another exemplary embodiment of this application.
FIG. 3 is a flowchart of a method for transmitting address information according to an exemplary embodiment of this application.
FIG. 4 is a flowchart of a method for transmitting address information according to another exemplary embodiment of this application.
FIG. 5 is a signaling format diagram of a PDU session establishment request according to an exemplary embodiment of this application.
FIG. 6 is a flowchart of a method for transmitting address information according to another exemplary embodiment of this application.
FIG. 7 is a flowchart of a method for obtaining address information according to an exemplary embodiment of this application.
FIG. 8 is a flowchart of a method for discovering an EASDF according to an exemplary embodiment of this application.
FIG. 9 is a flowchart of a PDU session establishment method according to an exemplary embodiment of this application.
FIG. 10 is a flowchart of a method for adding an additional PDU session anchor and an additional branching point (BP) or uplink classifier (UL CL) according to an exemplary embodiment of this application.
FIG. 11 is a block diagram of an apparatus for transmitting address information according to an exemplary embodiment of this application.
FIG. 12 is a block diagram of an apparatus for obtaining address information according to another exemplary embodiment of this application.
FIG. 13 is a block diagram of a network element device according to an exemplary embodiment of this application.

### DESCRIPTION OF EMBODIMENTS

Edge computing (EC) provides cloud services and Internet Technology (IT) environment services for application developers and service providers on an edge side of a network, and aims at providing computing, storage, and network bandwidth at a place close to the data input or user. For example, when a user uses a game program A on a mobile phone, an EC server closest to the mobile phone of the user can be allocated, to provide a background game service of the game program A, so as to provide a game service with the smallest network latency for the user.

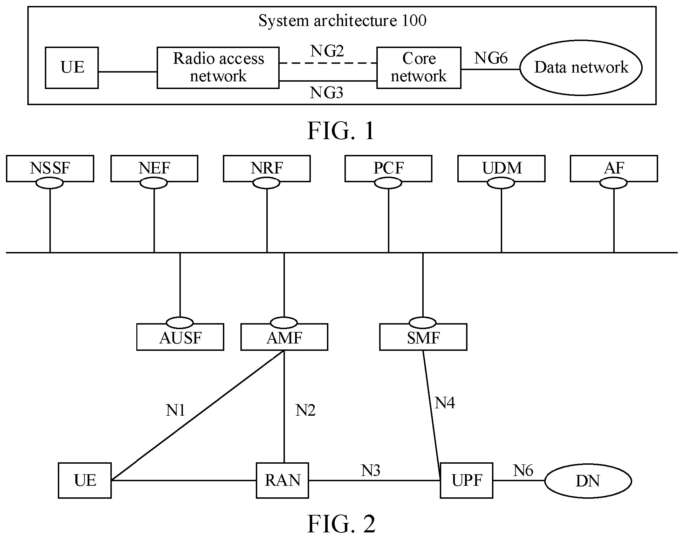

FIG. 1 is a schematic architectural diagram of a communication system 100 according to an exemplary embodiment of this application. As shown in FIG. 1, the communication system 100 may include: user equipment (UE), a radio access network (RAN), a core network (Core), and a data network (DN). The UE, RAN, and Core are the main components of the architecture. Logically, they can be divided into two parts: the user plane and the control plane. The control plane is responsible for management of a mobile network, and the user plane is responsible for transmission of service data. In FIG. 1, an NG2 reference point is located between a RAN control plane and a Core control plane, an NG3 reference point is located between a RAN user plane and a Core user plane, and an NG6 reference point is located between the Core user plane and a data network.

UE is an entrance for interaction between a mobile subscriber and a network, can provide a basic computing power and storage capability, display a service window to a user, and accept input of an operation performed by a user. UE may establish a signal connection and a data connection with a RAN by using the next generation air interface technology, so as to transmit control signals and service data to a mobile network.

A RAN is similar to a base station in a conventional network, is deployed at a location close to UE, provides a network access function for authorized users in coverage of a cell, and can transmit user data by using transmission tunnels of different quality according to a level of a user, requirements of a service, and the like. A RAN can manage its own resources for appropriate utilization, provide an access service for UE on demand, and forward control signals and user data between the UE and the core network.

A Core is responsible for maintaining subscription data of a mobile network, managing a network element of the mobile network, providing functions, such as session management, mobility management, policy management, and security authentication, for UE, and providing network access authentication for UE when the UE is attached, allocating network resources for UE when the UE has a service request, updating network resources for UE when the UE moves, providing a fast recovery mechanism for UE when the UE is idle, releasing network resources for UE when the UE is detached, providing a data routing function for UE, for example, forwarding uplink data to a DN, when the UE has service data, or receiving UE downlink data from a DN and forwarding the UE downlink data to a RAN, so as to transmit the UE downlink data to UE.

A DN is a data network providing business services for users. Usually, a client is located in UE, and a server is located in the data network. The DN may be a private network, for example, a local area network, or an external network that is not controlled by an operator, for example, the Internet, or a dedicated network jointly deployed by operators, for example, to configure an IP Multimedia Core Network Subsystem (IMS) service.

FIG. 2 is a detailed architecture determined based on FIG. 1, in which a core network user plane includes a user plane function (UPF), and a core network control plane includes an authentication server function (AUSF), an access and mobility management function (AMF), a session management function (SMF), a network slicing selection function (NSSF), a network exposure function (NEF), a network function repository function (NRF), unified data management (UDM), a policy control function (PCF), and an application function (AF). Functions of the functional entities are as follows:
The UPF forwards a user data packet according to a routing rule of the SMF.
The AUSF performs security authentication on UE.
The AMF performs UE access and mobility management.
The SMF performs UE session management.
The NSSF selects a network slice for UE.
The NEF exposes a network function to a third party using an API interface.
The NRF provides a storage function and a selection function of network functional entity information for other network elements.
The UDM performs user subscription context management.
The PCF performs user policy management.
The AF performs user application management.

In the architecture shown in FIG.2, an N1 interface is a reference point between the UE and the AMF; an N2 interface is a reference point between the RAN and the AMF, and configured to transmit a NAS message and so on; an N3 interface is a reference point between the RAN and the UPF, and configured to transmit user plane data and so on; an N4 interface is a reference point between the SMF and the UPF, and configured to transmit information, for example, tunnel identifier information, data cache indication information, and downlink data notification message of an N3 connection; an N6 interface is a reference point between the UPF and the DN, and configured to transmit user plane data and so on; and an NG interface is an interface between the radio access network and the 5G core network.

The name of an interface between network elements in FIG. 1 and FIG. 2 is just an example, and the name of the interface in a specific implementation may be another name, which is not specifically limited in the embodiments of this application. The names of network elements (for example, the SMF, the AF, and the UPF) included in FIG. 1 and FIG. 2 are also just an example, and do not limit the functions of the network element themselves. In 5GS and other networks in the future, the foregoing network elements may also have other names, which is not specifically limited in the embodiments of this application. For example, in the 6G network, some or all of the foregoing network elements can use the terms in 5G, and may also use other names, and so on. A unified description is provided herein, and details are not described below again. In addition, it is to be understood that the names of the messages (or signaling) transmitted between the network elements are also just an example, and do not constitute any limitation to the functions of the messages themselves.

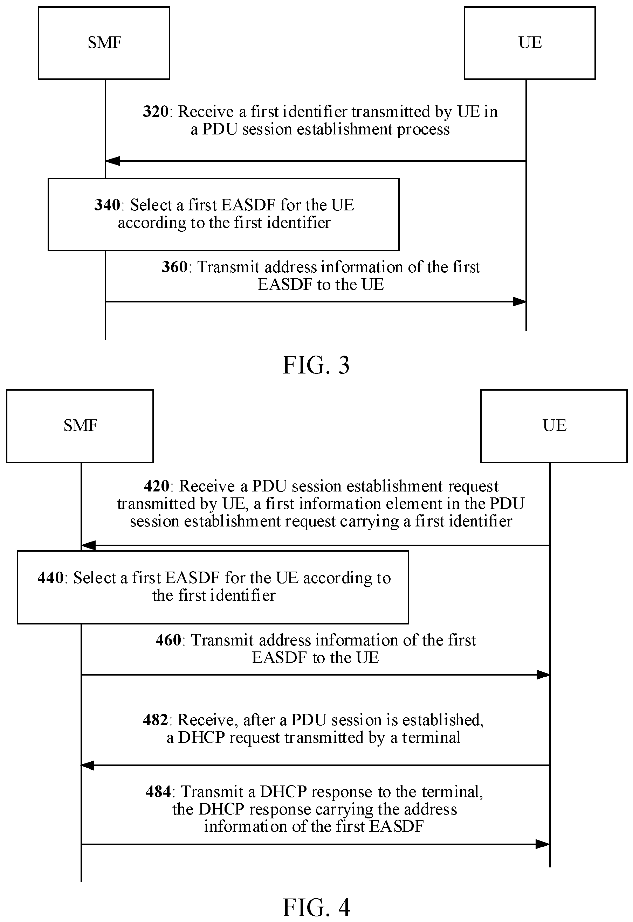

FIG. 3 is a flowchart of a method for transmitting address information according to a non-claimed embodiment of this application. This embodiment is described by using an example in which the method is applied to an SMF. The method includes the following steps:

**Step 320:** An SMF receives a first identifier transmitted by UE in a PDU session establishment process.

The UE transmits the first identifier to the SMF in a case that a PDU session established this time belongs to an edge connection of EC. Exemplarily, in a case that a PDU session established this time does not belong to an edge connection of EC, the first identifier is not transmitted to the SMF.

Exemplarily, the first identifier is used for indicating that a PDU session established this time is an edge connection of EC. For example, the user starts to use a service application supporting EC in the UE, and the UE establishes a PDU session for the service application.

Exemplarily, the first identifier includes an EC identifier or an EASDF identifier.

**Step 340:** The SMF selects a first EASDF for the UE according to the first identifier.

In the PDU session establishment process, if the SMF receives the first identifier transmitted by the UE, it is considered that the UE requires allocation, location, or selection of an EASDF.

The SMF selects a first EASDF for the UE according to a predetermined allocation principle. Exemplarily, the SMF locates an EASDF closest to the UE in terms of geographic location or network location, and selects the EASDF as the first EASDF. This embodiment does not limit how the SMF locates and selects the first EASDF.

**Step 360:** The SMF transmits address information of the first EASDF to the UE.

After the SMF selects the first EASDF for the UE, the SMF transmits the address information of the first EASDF to the UE. Optionally, the address information is an Internet Protocol (IP) address of the first EASDF.

After obtaining the IP address of the first EASDF, the UE uses a DNS-related service provided by the first EASDF, for example, a DNS query service.

In conclusion, in the method provided in this embodiment, the UE transmits a first identifier to the SMF in a PDU session establishment process, to trigger the SMF to select a first EASDF for the UE and transmit address information of the first EASDF to the UE, so that the SMF selects the first EASDF for the UE in a scenario triggered by the UE, to avoid the problem that SMF always allocates, to the UE, an EASDF that does not match the location of the UE, or never allocates an EASDF to the UE, or allocates an EASDF to the UE using an improper allocation method (for example, selecting an EASDF with the lowest load according to loads of EASDFs; or allocating a general DNS server), and instead, properly allocate an EASDF based on a current location of the UE in a case that the UE has a corresponding demand.

In an optional embodiment based on FIG. 3, the first identifier is carried in a PDU session establishment request, and the PDU session establishment request is a signaling message transmitted by the UE to the SMF. The address information of the first EASDF is carried in a PDU session establishment accept, and the PDU session establishment accept is a signaling message transmitted by the SMF to the UE.

FIG. 4 is a flowchart of a method for transmitting address information according to an exemplary embodiment of the claimed invention. This embodiment is described by using an example in which the method is applied to an SMF. The method includes the following steps:

**Step 420:** An SMF receives a PDU session establishment request transmitted by UE, a first information element in the PDU session establishment request carrying a first identifier.

The UE transmits the first identifier to the SMF in a case that a PDU session established this time belongs to an edge connection of EC. In a case that a PDU session established this time does not belong to an edge connection of EC, the first identifier is not transmitted to the SMF.

The first identifier is used for indicating that a PDU session established this time is an edge connection of EC. For example, the user starts to use a service application supporting EC in the UE, and the UE establishes a PDU session for the service application.

The first identifier includes an EC identifier or an EASDF identifier. In this embodiment, the first identifier is carried in a first information element.

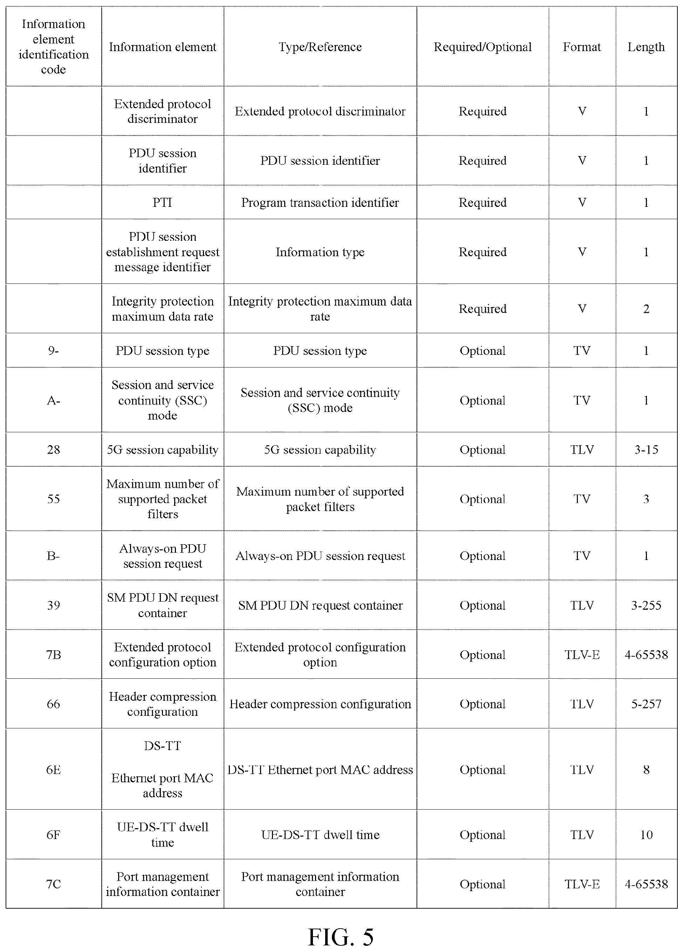

FIG. 5 shows a signaling format of a PDU session establishment request in the related art. A first information element is added to the signaling format of the PDU session establishment request, and the first identifier is carried by using the first information element. Exemplarily, the first information element is an EC connection indicator information element.

The first information element can add to any column in the signaling format shown in FIG. 5. The type of the first information element is optional.

The TLV format in FIG. 5 are Type, Length, and Value. Type is a message type, Length is a length of a value, and Value is an actual value. T and L have fixed lengths, and the length of V is specified by Length. TLV-E refers to the extended TLV format, TV is a message type and an actual value, and V is the actual value.

Step **440:** The SMF selects a first EASDF for the UE according to the first identifier.

In the PDU session establishment process, the SMF receives a PDU session establishment request transmitted by the UE, a first information element in the PDU session establishment request carrying a first identifier. If the SMF obtains, by parsing in the PDU session establishment request, the first identifier transmitted by the UE, it is considered that the UE requires allocation, location, or selection of an EASDF.

The SMF selects a first EASDF from a plurality of candidate EASDFs for the UE according to a predetermined allocation principle. Exemplarily, the SMF locates an EASDF closest to the UE in terms of geographic location or network location, and selects the EASDF as the first EASDF. This embodiment does not limit how the SMF locates and selects the first EASDF.

In a schematic example, when the UE obtains its own IP address, the UE needs to request the SMF to allocate a first UPF from a plurality of UPFs. The first UPF assigns an IP address to the UE. The SMF can select an EASDF connected to the first UPF as an EASDF closest to the UE. The SMF knows the full or partial network topology information of the core network in advance, and the network topology information includes UPFs and EASDFs connected to the UPFs. Alternatively, the SMF selects an EASDF closest to the UE in terms of network location based on the IP address of the UE, for example, selects an EASDF within the same network segment according to a gateway address or a network segment address to which the IP address belongs.

**Step 460:** The SMF transmits a PDU session establishment accept to the UE, the PDU session establishment accept carrying address information of the first EASDF.

After the SMF selects the first EASDF for the UE, the SMF transmits the address information of the first EASDF to the UE. The address information refers to an IP address of the first EASDF. After obtaining the IP address of the first EASDF, the UE uses a DNS-related service provided by the first EASDF.

The SMF transmits a PDU session establishment accept to the UE, the PDU session establishment accept carrying address information of the first EASDF.

Optionally, non claimed, the PDU session establishment accept includes an extended protocol configuration option (EPCO) information element. The address information of the first EASDF is carried in a third information element in the EPCO information element. Exemplarily, the third information element is a 0003 information element.

**Step 482:** The SMF receives, non claimed, after a PDU session is established, a Dynamic Host Configuration Protocol (DHCP) request transmitted by a terminal.

After the PDU session is established, the UE may initiate a DHCP request to the SMF through a user plane, to obtain an address of a DNS Server. In this case, the SMF also needs to transmit a DHCP response to the UE. The DHCP response includes the address information of the first EASDF, that is, the IP address of the first EASDF.

**Step 484:** The SMF transmits, non claimed, a DHCP response to the terminal, the DHCP response carrying the address information of the first EASDF.

Exemplarily, non claimed, the address information of the first EASDF is carried in a fourth information element of an EPCO information element of the DHCP response.

That is, if the SMF provides the address information of the first EASDF in the EPCO information element of the PDU session establishment request, then the SMF also needs to make the DHCP response include the same address information of the first EASDF.

The address information of the first EASDF in the PDU session establishment request is triggered by an operating system (OS) of the UE. Moreover, the UE obtains the address information of the first EASDF (an address of the DNS Server) through the user plane by using the DHCP, which is usually triggered by an application (APP) run on the UE.

In conclusion, in the method provided in this embodiment, the first identifier is transmitted to the SMF by adding a first information element to the PDU session establishment request by the UE, to enable the SMF to obtain the first identifier as soon as possible in the PDU session establishment process, so that the SMF appropriately allocate the first EASDF to the UE in a case that the UE has a demand.

FIG. 6 is a flowchart of a method for transmitting address information according to another non claimed embodiment of this application. This embodiment is described by using an example in which the method is applied to an SMF. The method includes the following steps:

**Step 620:** An SMF receives a PDU session establishment request transmitted by UE, a second information element of an extended protocol configuration option in the PDU session establishment request carrying a first identifier.

The UE transmits the first identifier to the SMF in a case that a PDU session established this time belongs to an edge connection of EC. Exemplarily, in a case that a PDU session established this time does not belong to an edge connection of EC, the first identifier is not transmitted to the SMF.

The first identifier is used for indicating that a PDU session established this time is an edge connection of EC. For example, the user starts to use a service application supporting EC in the UE, and the UE establishes a PDU session for the service application.

Exemplarily, the first identifier includes an EC identifier or an EASDF identifier. In this embodiment, the first identifier is carried in a first information element.

Exemplarily, the first information element is an EC connection indicator information element.

FIG. 5 shows a signaling format of a PDU session establishment request in the related art. The information element (IE) in the PDU session establishment request includes: an EPCO information element, a second information element added to the EPCO information element being used to carry the first identifier.

In an exemplary example, the EPCO information element includes at least the following information elements:
in a direction from the terminal to the network (that is, a direction from the UE to the SMF):
   0001H (P-CSCF IPv6 address request);
   0002H (IM CN subsystem signal label); and
   0003H (DNS service IPv6 address request); and
in a direction from the network to the terminal (that is, a direction from the SMF to the UE):
   0001H (P-CSCF IPv6 address request);
   0002H (IM CN subsystem signal label); and
   0003H (DNS service IPv6 address request);

An extended second information element is added to the foregoing EPCO information element. The second information element is an EASDF IP address request information element. For example, the second information element is as follows:
0013H (EASDF IP address request).

Step 640: The SMF selects a first EASDF for the UE according to the first identifier.

In the PDU session establishment process, the SMF receives a PDU session establishment request transmitted by the UE, a second information element in an EPCO information element in PDU session establishment request carrying a first identifier.

If the SMF obtains, by parsing in the PDU session establishment request, the first identifier transmitted by the UE, it is considered that the UE requires allocation, location, or selection of an EASDF.

The SMF selects a first EASDF for the UE according to a predetermined allocation principle. Exemplarily, the SMF locates an EASDF closest to the UE in terms of geographic location or network location, and selects the EASDF as the first EASDF. This embodiment does not limit how the SMF locates and selects the first EASDF.

Step 660: The SMF transmits a PDU session establishment accept to the UE, the PDU session establishment accept carrying address information of the first EASDF.

After the SMF selects the first EASDF for the UE, the SMF transmits the address information of the first EASDF to the UE. Optionally, the address information refers to an IP address of the first EASDF.

After obtaining the IP address of the first EASDF, the UE uses a DNS-related service provided by the first EASDF.

Optionally, the PDU session establishment accept includes an EPCO information element. The 0003H information element in the EPCO information element carries the address information of the first EASDF.

Step 682: The SMF receives, after a PDU session is established, a DHCP request transmitted by a terminal.

After the PDU session is established, the UE may initiate a DHCP request to the SMF through a user plane, to obtain an address of a DNS Server. In this case, the SMF also needs to transmit a DHCP response to the UE. The DHCP response includes the address information of the first EASDF, that is, the IP address of the first EASDF.

Step 684: The SMF transmits a DHCP response to the terminal, the DHCP response carrying the address information of the first EASDF.

Exemplarily, the address information of the first EASDF is carried in a fourth information element of an EPCO information element of the DHCP response.

That is, if the SMF provides the address information of the first EASDF in the EPCO information element of the PDU session establishment request, then the SMF also needs to make the DHCP response include the same address information of the first EASDF.

The address information of the first EASDF in the PDU session establishment request is triggered by an operating system (OS) of the UE. Moreover, the UE obtains the address information of the first EASDF through the user plane by using the DHCP, which is usually triggered by an APP run on the UE. That is, the SMF delivers address information twice in the PDU session establishment request process and the DHCP process, so that different program modules (the OS and the APP) in the UE can both obtain the address information of the first EASDF.

In conclusion, in the method provided in this embodiment, the first identifier is transmitted to the SMF by adding a second information element to the EPCO information element in the PDU session establishment request by the UE, to only modify the information element content in the EPCO information element without changing the number of first-level information elements in the PDU session establishment request, which has less modifications to the communication protocol, and can also enable the SMF to obtain the first identifier as soon as possible in the PDU session establishment process, so that the SMF appropriately allocate the first EASDF to the UE in a case that the UE has a demand.

FIG. 7 is a flowchart of a method for obtaining address information according to a claimed embodiment The method includes the following steps:
**Step 720:** UE transmits a first identifier to an SMF in a PDU session establishment process, the first identifier being used for triggering the SMF to locate and select a first EASDF for a terminal.

The UE transmits a PDU session establishment request to the SMF, the PDU session establishment request carrying the first identifier. The first identifier is used for indicating that a PDU session requested to be established this time belongs to an edge connection of EC.

The first identifier includes an EC identifier or an EASDF identifier.

In an embodiment, the first identifier is carried in a first information element of the PDU session establishment request. The first information element is an EC connection indicator information element. FIG. 5 shows a signaling format of a PDU session establishment request in the related art. A first information element is added to the signaling format of the PDU session establishment request, and the first identifier is carried by using the first information element. The first information element can add to any column in the signaling format shown in FIG. 5. The type of the first information element is optional.

In an embodiment, the first identifier is carried in a second information element of the EPCO information element of the PDU session establishment request. That is, the information element in the PDU session establishment request includes: an EPCO information element, a second information element added to the EPCO information element being used to carry the first identifier. Exemplarily, the EPCO information element includes at least the following information elements:
in a direction from the terminal to the network (that is, a direction from the UE to the SMF):
   0001H (P-CSCF IPv6 address request);
   0002H (IM CN subsystem signal label); and
   0003H (DNS service IPv6 address request); and
in a direction from the network to the terminal (that is, a direction from the SMF to the UE):
   0001H (P-CSCF IPv6 address request);
   0002H (IM CN subsystem signal label); and
   0003H (DNS service IPv6 address request);

An extended second information element is added to the foregoing EPCO information element. The second information element is an EASDF IP address request information element. For example, the second information element is as follows:
0013H (EASDF IP address request).

After the UE transmits a PDU session establishment request carrying the first identifier to the SMF, the SMF allocates, locates, or selects a first EASDF for the UE.

The SMF transmits a PDU session establishment accept to the UE, the PDU session establishment accept carrying address information of the first EASDF. Optionally, the PDU session establishment accept includes an EPCO information element. The 0003H information element in the EPCO information element carries the address information of the first EASDF.

**Step 740:** The UE receives address information of the first EASDF.

The UE receives a PDU session establishment accept transmitted by the SMF, the PDU session establishment accept carrying address information of the first EASDF. The address information refers to an IP address of the first EASDF.

Exemplarily, the address information of the first EASDF is carried in a third information element of an EPCO of the PDU session establishment accept.

After obtaining the IP address of the first EASDF, the UE uses a DNS-related service provided by the first EASDF, for example, a DNS query service.

**Step 760:** Transmit, after a PDU session is established, a DHCP request to the SMF.

After the PDU session is established, the UE may initiate a DHCP request to the SMF through a user plane, to obtain an address of a DNS Server. In this case, the SMF also needs to transmit a DHCP response to the UE. The DHCP response includes the address information of the first EASDF, that is, the IP address of the first EASDF.

**Step 780:** Receive a DHCP response transmitted by the SMF, the DHCP response carrying the address information of the first EASDF.

The address information of the first EASDF is carried in a fourth information element of an EPCO of the DHCP response.

Exemplarily, the address information of the first EASDF is carried in a fourth information element of an EPCO information element of the DHCP response.

That is, if the SMF provides the address information of the first EASDF in the EPCO information element of the PDU session establishment request, then the SMF also needs to make the DHCP response include the same address information of the first EASDF.

The address information of the first EASDF in the PDU session establishment request is triggered by an operating system (OS) of the UE. Moreover, the UE obtains the address information of the first EASDF through the user plane by using the DHCP, which is usually triggered by an APP run on the UE. That is, the SMF delivers address information twice in the PDU session establishment request process and the DHCP process, so that different program modules (the OS and the APP) in the UE can both obtain the address information of the first EASDF.

Step 760 and step 780 are optional steps in this embodiment, and in some embodiments, the two steps may not be performed.

In conclusion, in the method provided in this embodiment, the first identifier is transmitted to the SMF by adding a first information element to the PDU session establishment request by the UE, to enable the SMF to obtain the first identifier as soon as possible in the PDU session establishment process, so that the SMF appropriately allocate the first EASDF to the UE in a case that the UE has a demand.

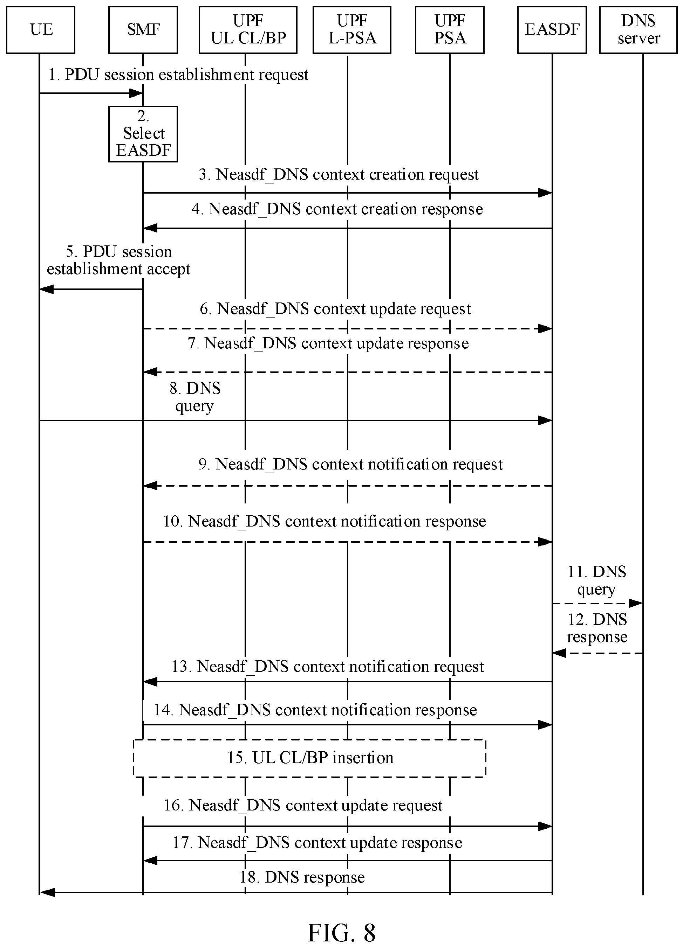

FIG. 8 is a flowchart of a method for discovering an EASDF according to an exemplary embodiment of this application. The method is performed by UE, an SMF, a UPF, an EASDF, and a DN Server. The method includes the following steps:
**Step 1:** The UE transmits a PDU session establishment request to the SMF.

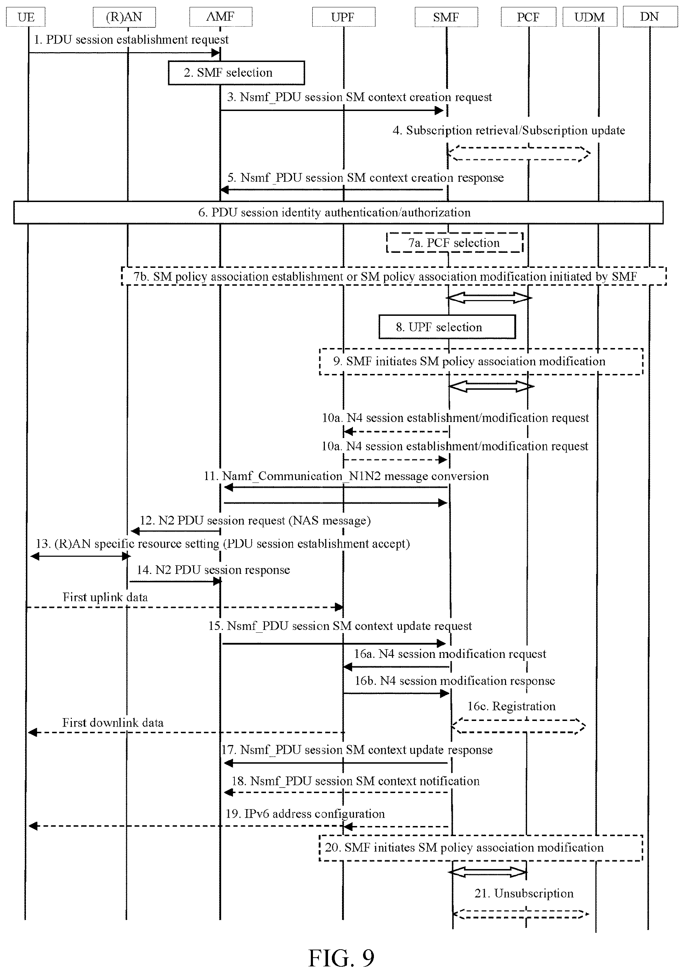

The PDU session establishment request carries a first identifier, referring to step 720 or step 1 in FIG. 9.

**Step 2:** The SMF selects an EASDF.

The SMF finds that the PDU session establishment request includes the first identifier, and selects a first EASDF for the UE. The first EASDF is an EASDF selected by the SMF for the UE.

For a process in which the SMF selects an EASDF, reference may be made to the related descriptions in Clause 6.3 of the communication protocol TS23.501. This selection process may be found using the NF repository function (NRF), or may be configured locally based on the SMF. The EASDF may have been registered with the NRF.

**Step 3:** The SMF transmits an Neasdf_DNS context creation request to the EASDF.

Neasdf refers to an interface or a reference point between the SMF and the EASDF.

The SMF invokes an Neasdf_DNS context creation request to the selected EASDF. The Neasdf_DNS context creation request carries (an IP address of the UE, a callback uniform resource identifier (URI), and a rule for processing a DNS message from the UE). The rule for processing a DNS message from the terminal (that is, the DNS message handling rule) includes a DNS message forwarding rule and/or a DNS message reporting rule. The DNS message forwarding rule includes a to-be-forwarded DNS server address and/or a to-be-added extended DNS-client-subnet (ECS) option.

The EASDF creates a DNS context for the PDU session, and stores the IP address of the UE, the callback URI, and the rule for processing a DNS message from the UE to the context.

The DNS message reporting rule includes a reporting condition of reporting DNS information (including EAS-related information) to SMF when the EASDF receives a DNS query or a DNS response.

The EASDF handles an ECS option of the DNS query or performs local DNS server address handling. The SMF provides a reporting rule to guide the EASDF to transmit the fully qualified domain name (FQDN) of the edge application server (EAS) to the SMF if the FQDN of the EAS in the DNS query message matches the DNS information reporting rule of the FQDN(s) filter.

The EASDF handles a specific IP address or FQDN range of the DNS response. The SMF provides a reporting rule to guide the EASDF to report the IP address/FQDN of the EAS to the SMF if a DNS response message of the EAS matches an IP address realm(s) reporting rule for the IP address or an FQDN DNS response matches a FQDN DNS message reporting rule.

Before EASDF receives DNS query message or after the DNS query is reported, the EASDF provides a forwarding rule, that is, an ECS option or a local DNS server for FQDN(s) and data network access identifier(s) (DNAI).

**Step 4:** The EASDF transmits an Neasdf_DNS context creation response to the SMF.

The EASDF invokes an Neasdf_DNSContext_Create response service operation (an IP address of the EASDF) and uses information that allows the SMF to update or delete the context later.

The IP address of the EASDF is an address with which the terminal is connected to the EASDF that serves as a DNS server where of a PDU session.

**Step 5:** The SMF transmits a PDU session establishment accept to the UE.

The PDU session establishment request carries the address information of the first EASDF, referring to step 460 or step 660.

**Step 6:** The SMF transmits an Neasdf_DNS context update request to the EASDF.

The SMF may invoke an Neasdf_DNS context update request (PDU session context ID and a rule for handling a DNS query on UE) to the EASDF. A mobility problem may be triggered by the update, for example, when the problem is moved to a new location, or an EASDF DNS query with some FQDNs is reported, or insertion/removal of a local PSA may be triggered by the update, for example, rules are updated to handle the DNS information problem or new PCC rule information.

**Step 7:** The EASDF transmits an Neasdf_DNS context update response to the SMF.

**Step 8:** The UE transmits a DNS query to the EASDF.

The EASDF transmits an Neasdf_DNS context creation request.

**Step 9:** The EASDF transmits an Neasdf_DNS context notification request to the SMF.

If the DNS message reporting condition is matched, the EASDF reports the DNS message to the SMF by invoking the Neasdf_DNSContext _Notify request.

**Step 10:** The SMF transmits an Neasdf_DNS context notification request to the EASDF.

In the Neasdf_DNS context notification response includes a plurality of possible options as follows:

For an option A, the SMF may make the response message include a corresponding ECS option.

For an option B, the SMF may make the response message include an IP address of a corresponding local DNS server. The EASDF may also be instructed to simply forward the DNS query to a pre-configured DNS server/parser.

**Step 11:** The EASDF transmits a DNS query to the DNS server.

For the option A, the EASDF adds the ECS option to the DNS query message as specified in RFC 7871, and transmits it to a central DNS (C-DNS) server. The C-DNS is configured on the EASDF locally or by the SMF.

For the option B, the EASDF transmits a DNS query message to the local DNS server. The local DNS server is provided by the SMF in step 10.

If neither of the reporting rule and the forwarding rule provided by the SMF matches the FQDN requested in the DNS query, then EASDF may simply forward the DNS query to a pre-configured DNS server/parser.

**Step 12:** The DNS server transmits a DNS response to the EASDF.

The EASDF receives the DNS response from the DNS system and determines whether the DNS response can be transmitted to the terminal.

**Step 13:** The EASDF transmits an Neasdf_DNS context notification request to the SMF.

If the IP address or FQDN of the EAS in the DNS response message matches the reporting condition provided by SMF, the EASDF can transmit DNS message reporting information, including EAS information, to the SMF by invoking an Neasdf_DNS context notification request.

The EASDF does not transmit a DNS response message to UE, and instead, waits for an SMF instruction.

**Step 14:** The SMF transmits an Neasdf_DNS context notification request to the EASDF.

The SMF invokes an Neasdf_DNSContext _Notify response service operation.

**Step 15:** Perform uplink classifier (UL CL)/branching point (BP) insertion.

The SMF can select an UL CL/BP and a local PSA, and insert the UL CL/BP and the local PSA.

Based on the EAS information received from the EASDF and other UPF selection criteria as specified in Clause 6.3.3 in the communication protocol TS 23.501, the SMF may perform UL CL/BP and local PSA selection and insertion as described in TS 23.502.

**Step 16:** The SMF transmits an Neasdf_DNS context update request to the EASDF.

The SMF invokes an Neasdf_DNSContext _Update request (a forward DNS response indication).

"Forward DNS response" means that the EASDF forwards the DNS response cached in step 12 to the UE.

**Step 17:** The EASDF transmits an Neasdf_DNS context update response to the SMF.

**Step 18:** The EASDF transmits the DNS response to the UE.

FIG. 9 is a flowchart of a PDU session establishment method according to an exemplary embodiment of this application. The method is performed by UE, a RAN, an AMF, an SMF, a UPF, a PCF, a UDM, and a DN. The method includes the following steps:
Step 1: The UE transmits a PDU session establishment request to the AMF.
Step 2: The AMF performs SMF selection.
Step 3: The AMF transmits an Nsmf_PDU session SM context creation request to the SMF.
Step 4: The SMF and the UDM perform subscription retrieval/subscription update.
Step 5: The SMF transmits an Nsmf_PDU session SM context creation response to the AMF.
Step 6: Perform PDU session identity authentication/authorization.
Step 7a: Perform PCF selection.
Step 7b: Perform SM policy association establishment or SM policy association modification initiated by the SMF.
Step 8: Perform UPF selection.
Step 9: The SMF initiates SM policy association modification.
Step 10a: The SMF transmits an N4 session establishment/modification request to the UPF.
Step 10b: The UPF transmits the N4 session establishment/modification request to the SMF.
Step 11: The SMF transmits Namf_CommunicationN1N2 message conversion to the AMF.
Step 12: The AMF transmits an N2 PDU session request (NAS message) to a (R)AN.
Step 13: The UE and the (R)AN perform (R)AN specific resource setting.
Step 14: The (R)AN transmits an N2 PDU session response to the AMF.
Step 15: The AMF transmits an Nsmf_PDU session SM context update request to the SMF.
Step 16a: The SMF transmits an N4 session modification request to the UPF.
Step 16b: The UPF transmits the N4 session modification request to the SMF.
Step 16c: The SMF and the UDM perform a registration procedure.
Step 17: The SMF transmits an Nsmf_PDU session SM context update response to the AMF.
Step 18: SMF transmits an Nsmf_PDU session SM context notification to the AMF.
Step 19: The SMF performs IPv6 address configuration to the UE.
Step 20: The SMF initiates SM policy association modification.
step 21: The SMF unsubscribes from the PCF.

Note 1: Steps 2 to 4 in FIG. 8 are to be implemented before step 11 shown in FIG. 9.

Note 2: Step 5 in FIG. 8 corresponds to steps 11 to 16 shown in FIG. 9.

Note 3: Steps 6 to 18 in FIG. 8 can be performed after step 21 in FIG. 9, or step 8 in FIG. 8 corresponds to first uplink data (first UL data) before step 15 in FIG. 9.

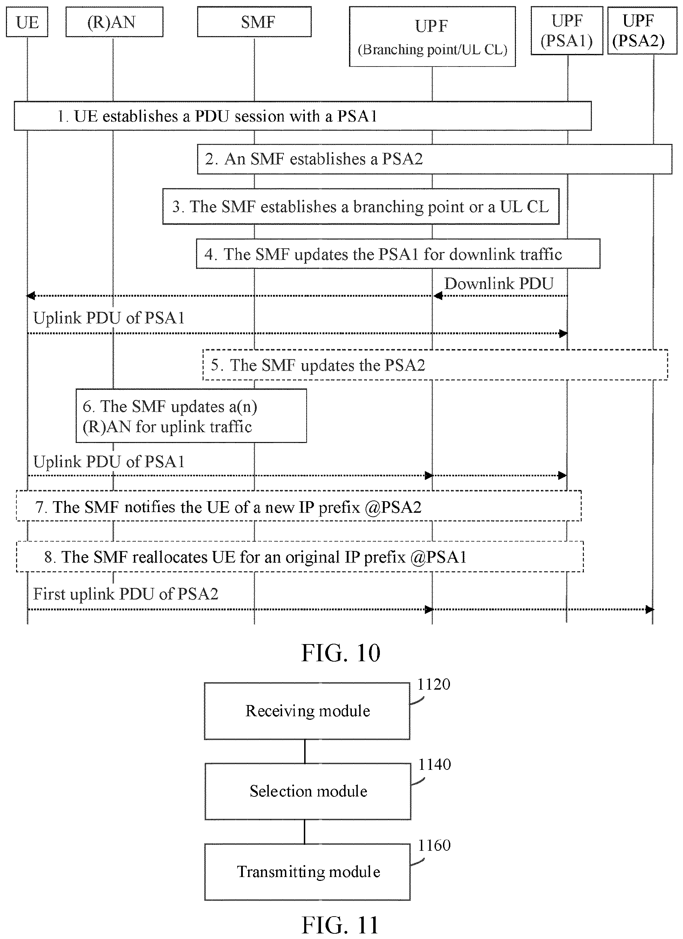

The UL CL/branching point insertion procedure in step 15 shown in FIG. 8 is steps 2 to 8 shown in FIG. 10 below. FIG. 10 is a flowchart of a method for adding an additional PDU session anchor and an additional branching point or UL CL according to an exemplary embodiment of this application. The method is performed by UE, a RAN, an SMF, and a UPF. The method includes the following steps:
Step 1: The UE establishes a PDU session with a PSA1.

The UE has an established PDU session of which a UPF includes a PDU session anchor 1 (that is, a PSA1). A PDU session user plane involves at least the (R)AN and the PDU session anchor 1.

Step 2: The SMF establishes a PSA2.

At some time, the SMF decides to establish a new PDU session anchor, for example, for new traffic detection due to UE mobility. The SMF selects a UPF and establishes a new PDU session anchor 2 (that is, the PSA2) for the PDU Session by using an N4. In the case of an IPv6 multi-homed PDU session, the SMF also allocates a new IPv6 prefix corresponding to the PSA2, and if PCF has an event of allocating/releasing a user IP address, the SMF performs a session management policy modification procedure, to provide a newly allocated IPv6 prefix for the PCF.

If runtime coordination between the 5GC and an AF is enabled based on local configuration, the SMF waits for a notification response from the AF according to an indication of "expected AF acknowledgment" included in the AF subscription to SMF events. If the SMF receives a negative notification response from the AF, then the SMF can stop the procedure.

Step 3: The SMF establishes a branching point or a UL CL.

The SMF selects a UPF and establishes a branching point (in the case of IPv6 multi-homing) or PDU CL for a PDU session by using an N4. The SMF provides necessary uplink forwarding rules, including PSA1 CN channel information and PSA2 CN channel information, for the PSA1 and the PSA2. In addition, the AN channel information is provided for downlink forwarding. In the case of IPv6 multi-homing, the SMF also provides traffic filters for IPv6 prefixes corresponding to the PSA1 and the PSA2, indicating which traffic will be forwarded to the PSA1 and the PSA2 respectively. In the case of a UL CL, the SMF provides a traffic filter, indicating which traffic is to be forwarded to the PSA1 and the PSA2 respectively.

In the case of a UL CL, the SMF provides a traffic filter, indicating which traffic will be forwarded to the PSA1 and the PSA2 respectively. If runtime coordination between the 5GC and an AF is enabled based on local configuration, the SMF transmits a delay notification to the AF and waits for a notification according to an indication of "expected AF acknowledgment" included in the AF subscription to SMF events. Before configuring the UL CL, the AF may make a response. If the SMF receives a negative notification response from the AF, then the SMF can stop the procedure.

Note 1: If the branching point or UL CL and the PSA2 are co-located in a single UPF, then steps 2 and 3 can be combined. If a branching point has been allocated, step 3 is skipped.

Step 4: The SMF updates the PSA1 for downlink traffic.

The SMF updates the PSA1 for downlink traffic by using an N4. The SMF provides branching point or UL CL CN channel information for downlink traffic.

Note 2: If the branching point or UL CL and the PSA1 are co-located in a single UPF, then steps 3 and 4 can be combined.

Step 5: The SMF updates the PSA2;
The SMF updates the PSA2 by using the N4. The SMF provides branching point or UL CL CN channel information for downlink traffic.

Note 3: If the branching point or UL CL and the PSA2 are co-located in a single UPF, then step 5 is not needed.

Step 6: The SMF updates the (R)AN for uplink traffic.

The SMF updates the (R)AN using N2 SM information on an N11. The SMF provides new CN channel information corresponding to the UPF (branching point or UL CL). In the case of a UL CL, if there is an existing UPF between the (R)AN and the newly inserted UL CL, the SMF updates the existing UPF using the N4 instead of updating the (R)AN.

Step 7: The SMF notifies the UE of a new IP prefix @PSA2.

In the case of IPv6 multi-homing, the SMF notifies the UE of the usability of the new IP prefix @PSA2. This is performed using the IPv6 router advertisement message (RFC 4861). In addition, the SMF transmits a routing rule along with the IPv6 prefix to the UE using the IPv6 router advertisement message (RFC 4191), for example, as described in Section 5.8.1.2 of the communication protocol TS 23.501.

If runtime coordination between the 5GC and an AF is enabled based on local configuration, according to an indication of "expected AF acknowledgment" included in the AF subscription to SMF events, the SMF transmits a delay notification to the AF and waits for a notification response, to transmit a new IP prefix from the AF to the UE. If the SMF receives a negative notification response from the AF, then the SMF can stop the procedure.

Step 8: The SMF reallocates UE for an original IP prefix @PSA1.

In the case of IPv6 multi-homing, the SMF can reallocate UE for an original IP prefix @PSA1. That is, the SMF transmits a routing rule along with the IPv6 prefix to the UE using the IPv6 router advertisement message (RFC 4191), for example, as described in Section 5.8.1.2 of the communication protocol TS 23.501.

Note: The Request For Comments (RFC) is a series of memoranda issued by the Internet Engineering Task Force (IETF). The documents collect information about the Internet, as well as software documents for UNIX and the Internet community, are arranged by numbers. RFC documents are currently issued under the auspices of the Internet Society (ISOC).

FIG. 11 is a block diagram of an apparatus for transmitting address information according to an exemplary embodiment of this application. The apparatus may be applied to an SMF or implemented as a part of an SMF. The apparatus includes:
a receiving module 1120, configured to receive a first identifier transmitted by a terminal in a PDU session establishment process;
a selection module 1140, configured to select a first EASDF for the terminal according to the first identifier; and
a transmitting module 1160, configured to transmit address information of the first EASDF to the terminal.

Optionally, the receiving module 1120 is configured to receive a PDU session establishment request transmitted by the terminal, the PDU session establishment request carrying the first identifier. The first identifier is used for indicating that a PDU session requested to be established this time belongs to an edge connection of EC.

Optionally, the first identifier includes at least one of an EC identifier or an EASDF identifier.

In a design, the first identifier is carried in a first information element of the PDU session establishment request. The first information element is an EC connection indicator information element.

In a design, the first identifier is carried in a second information element of an extended protocol configuration option of the PDU session establishment request. The second information element is an EASDF IP address request information element.

Optionally, the transmitting module 1160 is configured to transmit a PDU session establishment accept to the terminal, the PDU session establishment accept carrying address information of the first EASDF.

Optionally, the address information of the first EASDF is carried in a third information element of an extended protocol configuration option of the PDU session establishment accept.

Optionally, the receiving module 1120 is configured to receiving, after the PDU session is established, a DHCP request transmitted by the terminal. The transmitting module 1160 is configured to transmit a DHCP response to the terminal, the DHCP response carrying the address information of the first EASDF.

Optionally, the address information of the first EASDF is carried in a fourth information element of an extended protocol configuration option of the DHCP response.

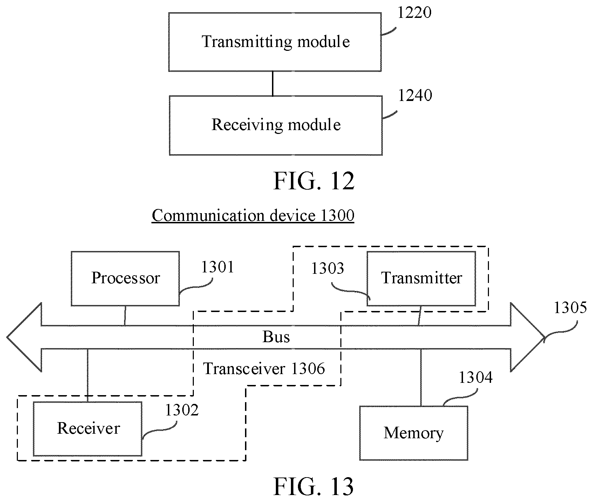

FIG. 12 is a block diagram of an apparatus for obtaining address information according to another exemplary embodiment of this application. The apparatus may be applied to a terminal or implemented as a part of a terminal. The apparatus includes:
a transmitting module 1220, configured to transmit a first identifier to an SMF in a PDU session establishment process, the first identifier being used for triggering the SMF to select a first EASDF for the terminal; and
a receiving module 1240, configured to receive address information of the first EASDF.

Optionally, the transmitting module 1220 is configured to transmit a PDU session establishment request to the SMF, the PDU session establishment request carrying the first identifier.

Optionally, the first identifier is used for indicating that a PDU session requested to be established this time belongs to an edge connection of EC.

Optionally, the first identifier includes an EC identifier or an EASDF identifier.

In a design, the first identifier is carried in a first information element of the PDU session establishment request. Optionally, the first information element is an EC connection indicator information element.

In a design, the first identifier is carried in a second information element of an extended protocol configuration option of the PDU session establishment request.

Optionally, the second information element is an EASDF IP address request information element.

Optionally, the receiving module 1240 is configured to receive a PDU session establishment accept transmitted by the SMF, the PDU session establishment accept carrying address information of the first EASDF. The address information of the first EASDF is carried in a third information element of an extended protocol configuration option of the PDU session establishment accept.

FIG. 13 is a schematic structural diagram of a communication device (a network element device or a terminal) according to an embodiment of this application. For example, the communication device may be configured to perform the foregoing method for transmitting address information or method for obtaining address information. Specifically, the communication device 1300 may include a processor 1301, a receiver 1302, a transmitter 1303, a memory 1304, and a bus 1305.

The processor 1301 includes one or more processing cores, and the processor 1301 performs various functional applications and information processing by running a software program and module.

The receiver 1302 and the transmitter 1303 can be implemented as one transceiver 1306. The transceiver 1306 may be a communication chip.

The memory 1304 is connected to the processor 1301 by the bus 1305.

The memory 1304 may be configured to store a computer program. The processor 1301 is configured to execute the computer program, to implement steps performed by the network element device, the access network entity, the core network element, or the core network entity in the foregoing method embodiments.

The transmitter 1303 is configured to perform transmission-related steps in the foregoing embodiments. The receiver 1302 is configured to perform reception-related steps in the foregoing embodiments. The processor 1301 is configured to perform steps other than the transmission and reception steps in the foregoing embodiments.

In addition, the memory 1304 may be implemented by any type of volatile or non-volatile storage device or a combination thereof. The volatile or non-volatile storage device includes, but is not limited to: a random-access memory (RAM), a read-only memory (ROM), an erasable programmable ROM (EPROM), an electrically erasable programmable ROM (EEPROM), a flash memory or another solid-state memory technology, a compact disc ROM (CD-ROM), a digital versatile disc (DVD) or another optical memory, a tape cartridge, a magnetic cassette, a magnetic disk memory, or another magnetic storage device.

In an exemplary embodiment, a network element device is provided, including a processor and a memory, the memory storing a computer program, the computer program being loaded and executed by the processor to implement the method for transmitting address information described above.

In an exemplary embodiment, a terminal is provided, including a processor and a memory, the memory storing a computer program, the computer program being loaded and executed by the processor to implement the method for obtaining address information described above.

This application further provides a computer-readable storage medium, the storage medium storing at least one instruction, at least one program, a code set or an instruction set, and the at least one instruction, the at least one program, the code set or the instruction set being loaded and executed by a processor to implement the method for transmitting address information or the method for obtaining address information according to the foregoing method embodiments.

Optionally, this application further provides a computer program product, including computer instructions, the computer instructions being stored in a computer-readable storage medium. A processor of a computer device reads the computer instructions from the computer-readable storage medium. The processor executes the computer instructions, to cause the computer device to perform the method for transmitting address information or the method for obtaining address information provided in the foregoing aspects.

## Claims

1. A method for transmitting address information, applicable to a session management function (SMF), the method comprising:
receiving a protocol data unit (PDU) session establishment request transmitted by a terminal in a PDU session establishment process;
in a case where the PDU session to be established belongs to an edge connection of edge computing EC, the establishment request carries a first identifier, selecting a first edge application server discovery function ,EASDF, from a plurality of candidate EASDFs for the terminal according to a predetermined allocation principle, wherein the first identifier comprises an EC identifier or an EASDF identifier, and the first identifier is configured to indicate that the PDU session requested to be established this time belongs to an edge connection of EC;
transmitting a PDU session establishment accept to the terminal, the PDU session establishment accept carrying address information of the first EASDF; and
wherein the address information of the first EASDF is an Internet Protocol ,IP, address of the first EASDF;
wherein the first identifier is carried in a first information element of the PDU session establishment request, and the first information element is an EC connection indicator information element; or wherein the first identifier is carried in a second information element of an extended protocol configuration option of the PDU session establishment request, and the second information element is an IP address request information element of the EASDF,
in a case where the PDU session to be established does not belong to an edge connection of the EC, the PDU session establishment request does not carry the first identifier.

2. A method for obtaining address information, applicable to a terminal, the method comprising: transmitting a PDU session establishment request to a SMF in a PDU session establishment process, wherein in a case where the PDU session to be established belongs to an edge connection of EC the PDU session establishment request carries a first identifier, wherein the first identifier is configured to trigger the SMF to select a first EASDF from a plurality of candidate EASDFs for the terminal according to a predetermined allocation principle, wherein the first identifier comprises an EC identifier or an EASDF identifier, and the first identifier is used for indicating that a PDU session requested to be established this time belongs to an edge connection of EC; and
receiving a PDU session establishment accept carrying address information of the first EASDF, wherein the address information of the first EASDF is an IP address of the first EASDF;
wherein the first identifier is carried in a first information element of the PDU session establishment request, and the first information element is an EC connection indicator information element; or
wherein the first identifier is carried in a second information element of an extended protocol configuration option of the PDU session establishment request, and the second information element is an IP address request information element of the EASDF,
wherein in a case where the PDU session to be established does not belong to an edge connection of EC, the first identifier is not transmitted.

3. A network element device, comprising a processor and a memory, the memory storing a computer program, the computer program being loaded and executed by the processor to implement the method for transmitting address information according to any one of claims 1 claim 2.

4. A computer-readable storage medium, storing a computer program, the computer program being loaded and executed by a processor to implement the method for transmitting address information according to any one of claims 1 or claim 2.

## Patentansprüche

1. Verfahren zur Übertragung von Adressinformationen, anwendbar auf eine Sitzungsverwaltungsfunktion (SMF), wobei das Verfahren umfasst:
Empfangen einer von einem Endgerät in einem PDU-Sitzungsaufbauprozess übermittelten Protokolldateneinheit-(PDU-)Sitzungsaufbauanforderung;
Sofern die aufzubauende PDU-Sitzung einer Edge-Verbindung des Edge-Computings (EC) angehört, die Aufbauanforderung einen ersten Bezeichner trägt, Auswählen einer ersten Edge-Anwendungsserver-Erkennungsfunktion (EASDF) aus einer Vielzahl von Kandidaten-EASDFs für das Endgerät gemäß einem vorbestimmten Zuteilungsprinzip, wobei der erste Bezeichner einen EC-Bezeichner oder einen EASDF-Bezeichner umfasst und der erste Bezeichner dazu konfiguriert ist, anzuzeigen, dass die diesmal angeforderte aufzubauende PDU-Sitzung einer Edge-Verbindung der EC angehört;
Übertragen einer PDU-Sitzungsaufbauannahme an das Endgerät, wobei die PDU-Sitzungsaufbauannahme Adressinformationen der ersten EASDF trägt; und
wobei die Adressinformationen der ersten EASDF eine Internetprotokoll-(IP-)Adresse der ersten EASDF sind;
wobei der erste Bezeichner in einem ersten Informationselement der PDU-Sitzungsaufbauanforderung getragen wird und das erste Informationselement ein EC-Verbindungsindikator-Informationselement ist; oder wobei der erste Bezeichner in einem zweiten Informationselement einer erweiterten Protokollkonfigurationsoption der PDU-Sitzungsaufbauanforderung getragen wird und das zweite Informationselement ein IP-Adressanforderungs-Informationselement der EASDF ist,
sofern die aufzubauende PDU-Sitzung keiner Edge-Verbindung der EC angehört, die PDU-Sitzungsaufbauanforderung den ersten Bezeichner nicht trägt.

2. Verfahren zum Erhalten von Adressinformationen, anwendbar auf ein Endgerät, wobei das Verfahren umfasst: Übertragen einer PDU-Sitzungsaufbauanforderung an eine SMF in einem PDU-Sitzungsaufbauprozess, wobei sofern die aufzubauende PDU-Sitzung einer Edge-Verbindung der EC angehört, die PDU-Sitzungsaufbauanforderung einen ersten Bezeichner trägt, wobei der erste Bezeichner dazu konfiguriert ist, die SMF auszulösen, eine erste EASDF aus einer Vielzahl von Kandidaten-EASDFs für das Endgerät gemäß einem vorbestimmten Zuteilungsprinzip auszuwählen, wobei der erste Bezeichner einen EC-Bezeichner oder einen EASDF-Bezeichner umfasst und der erste Bezeichner dazu verwendet wird, anzuzeigen, dass eine diesmal angeforderte aufzubauende PDU-Sitzung einer Edge-Verbindung der EC angehört; und
Empfangen einer PDU-Sitzungsaufbauannahme, die Adressinformationen der ersten EASDF trägt, wobei die Adressinformationen der ersten EASDF eine IP-Adresse der ersten EASDF sind;
wobei der erste Bezeichner in einem ersten Informationselement der PDU-Sitzungsaufbauanforderung getragen wird und das erste Informationselement ein EC-Verbindungsindikator-Informationselement ist; oder
wobei der erste Bezeichner in einem zweiten Informationselement einer erweiterten Protokollkonfigurationsoption der PDU-Sitzungsaufbauanforderung getragen wird und das zweite Informationselement ein IP-Adressanforderungs-Informationselement der EASDF ist,
wobei sofern die aufzubauende PDU-Sitzung keiner Edge-Verbindung der EC angehört, der erste Bezeichner nicht übertragen wird.

3. Netzwerkelementvorrichtung, umfassend einen Prozessor und einen Speicher, wobei der Speicher ein Computerprogramm speichert, das vom Prozessor geladen und ausgeführt wird, um das Verfahren zur Übertragung von Adressinformationen nach einem der Ansprüche 1 oder 2 zu implementieren.

4. Computerlesbares Speichermedium, das ein Computerprogramm speichert, wobei das Computerprogramm von einem Prozessor geladen und ausgeführt wird, um das Verfahren zur Übertragung von Adressinformationen nach einem der Ansprüche 1 oder 2 zu implementieren.

## Revendications

1. Une méthode de transmission d'informations d'adresse, applicable à une fonction de gestion de session (SMF), la méthode comprenant :
reception d'une demande d'établissement de session d'unité de données de protocole (PDU) transmise par un terminal dans un processus d'établissement de session PDU ;
dans le cas où la session PDU à établir appartient à une connexion edge de l'informatique en périphérie (EC), la demande d'établissement portant un premier identifiant, sélection d'une première fonction de découverte de serveur d'application en périphérie (EASDF), parmi une pluralité d'EASDFs candidates pour le terminal conformément à un principe d'attribution prédéterminé, dans lequel le premier identifiant comprend un identifiant EC ou un identifiant EASDF, et le premier identifiant est configuré pour indiquer que la session PDU dont l'établissement est demandé cette fois appartient à une connexion edge de l'EC ;
transmission d'un accord d'établissement de session PDU au terminal, l'accord d'établissement de session PDU portant des informations d'adresse de la première EASDF ; et
dans lequel les informations d'adresse de la première EASDF sont une adresse de protocole Internet (IP) de la première EASDF ;
dans lequel le premier identifiant est porté dans un premier élément d'information de la demande d'établissement de session PDU, et le premier élément d'information est un élément d'information d'indicateur de connexion EC ; ou dans lequel le premier identifiant est porté dans un deuxième élément d'information d'une option de configuration de protocole étendu de la demande d'établissement de session PDU, et le deuxième élément d'information est un élément d'information de demande d'adresse IP de l'EASDF,
dans le cas où la session PDU à établir n'appartient pas à une connexion edge de l'EC, la demande d'établissement de session PDU ne porte pas le premier identifiant.

2. Une méthode d'obtention d'informations d'adresse, applicable à un terminal, la méthode comprenant : transmission d'une demande d'établissement de session PDU à une SMF dans un processus d'établissement de session PDU, dans lequel dans le cas où la session PDU à établir appartient à une connexion edge de l'EC, la demande d'établissement de session PDU porte un premier identifiant, dans lequel le premier identifiant est configuré pour déclencher la SMF afin de sélectionner une première EASDF parmi une pluralité d'EASDFs candidates pour le terminal conformément à un principe d'attribution prédéterminé, dans lequel le premier identifiant comprend un identifiant EC ou un identifiant EASDF, et le premier identifiant est utilisé pour indiquer qu'une session PDU dont l'établissement est demandé cette fois appartient à une connexion edge de l'EC ; et
reception d'un accord d'établissement de session PDU portant des informations d'adresse de la première EASDF, dans lequel les informations d'adresse de la première EASDF sont une adresse IP de la première EASDF ;
dans lequel le premier identifiant est porté dans un premier élément d'information de la demande d'établissement de session PDU, et le premier élément d'information est un élément d'information d'indicateur de connexion EC ; ou
dans lequel le premier identifiant est porté dans un deuxième élément d'information d'une option de configuration de protocole étendu de la demande d'établissement de session PDU, et le deuxième élément d'information est un élément d'information de demande d'adresse IP de l'EASDF,
dans lequel dans le cas où la session PDU à établir n'appartient pas à une connexion edge de l'EC, le premier identifiant n'est pas transmis.

3. Un dispositif d'élément de réseau, comprenant un processeur et une mémoire, la mémoire stockant un programme informatique, le programme informatique étant chargé et exécuté par le processeur pour mettre en œuvre la méthode de transmission d'informations d'adresse selon l'une quelconque des revendications 1 ou 2.

4. Un support de stockage lisible par ordinateur, stockant un programme informatique, le programme informatique étant chargé et exécuté par un processeur pour mettre en œuvre la méthode de transmission d'informations d'adresse selon l'une quelconque des revendications 1 ou 2.
